# EUROPÄISCHE PATENTSCHRIFT

(11) **EP 3 826 160 B1**
(45) Veröffentlichungstag und Bekanntmachung des Hinweises auf die Patenterteilung: **27.12.2023**
(21) Anmeldenummer: 20206203.0
(22) Anmeldetag: 06.11.2020
(51) Int. Cl.: H02M 1/42, H02M 3/335, H02M 1/00

(54) **SCHALTNETZTEIL UND REGELVERFAHREN FÜR EIN SCHALTNETZTEIL**
SWITCHING POWER SUPPLY AND CONTROL METHOD FOR A SWITCHING POWER SUPPLY
CONVERTISSEUR CONTINU-CONTINU ET PROCÉDÉ DE RÉGLAGE POUR CONVERTISSEUR CONTINU-CONTINU

(30) Priorität: 25.11.2019 DE 102019131795
(43) Veröffentlichungstag der Anmeldung: 26.05.2021
(73) Patentinhaber: RK Rose + Krieger GmbH Verbindungs- und Positioniersysteme, 32423 Minden (DE)
(72) Erfinder: GAARMANN, Dirk, 31688 Nienstädt (DE)
(74) Vertreter: Kleine, Hubertus

(56) Entgegenhaltungen:
- EP-A1- 0 494 327
- EP-A2- 1 032 968
- DE-A1- 10 208 578
- US-A1- 2006 002 155
- US-B1- 7 433 211

## Beschreibung

Die Erfindung betrifft ein Schaltnetzteil mit einem leistungsfaktorkorrigierten Abwärts-Sperrwandler mit einem Übertrager zur Bereitstellung einer geregelten sekundärseitigen Ausgangsspannung. Die Erfindung betrifft weiterhin ein Regelverfahren für ein derartiges Schaltnetzteil.

Bei einem konventionellen Netzteil wird ein Transformator verwendet, um eine Eingangs-Wechselspannung in eine Spannung anderer Höhe zur transformieren, die danach gleichgerichtet und gegebenenfalls stabilisiert als Ausgangsgleichspannung abgegeben wird. Wenn eine geregelte Ausgangsspannung gewünscht ist, wird dieses durch einen sekundärseitigen Linearregler mit Längstransistor erreicht werden, was mit hohen Leistungsverlusten verbunden ist.

Bei Schaltnetzteilen wird dagegen die Eingangs-Wechselspannung zunächst gleichgerichtet und dann in eine Wechselspannung (oder pulsierende Spannung) mit höherer Frequenz umgerichtet, die unter Verwendung einer Speicherinduktivität in eine Spannung anderer Höhe gewandelt wird. Soll eine galvanische Trennung erfolgen, kann die Speicherinduktivität durch eine Primärspule eines Übertragers gebildet sein. Aufgrund der gegenüber der Netzfrequenz höheren Frequenz, mit der der Übertrager betrieben wird, kann er deutlich kleiner und damit leichter und materialsparender ausgebildet sein als ein konventioneller Transformator. Die gewandelte Spannung wird sekundärseitig wiederum gleichgerichtet und gesiebt. Dabei kann vorgesehen sein, ein die Höhe der Ausgangsspannung widerspiegelndes Signal, gegebenenfalls wiederum galvanisch getrennt, zurück zu führen, um die Ausgangsspannung durch Variationen der primärseitigen Ansteuerung des Übertragers auf einen gewünschten Wert einzuregeln. Üblicherweise wird zur Rückführung eines die Höhe der Ausgangsspannung widerspiegelnden Signals ein Optokoppler zur galvanischen Trennung eingesetzt. Alternativ kann auch eine in einer Hilfswicklung des Übertragers induzierten Spannung eingesetzt werden, um die sekundärseitige Ausgangsspannung primärseitig zu regeln. Ein Schaltnetzteil mit einer derartigen Regelung ist beispielsweise aus der Druckschrift DE 10 2015 012 614 A1 bekannt.

Auch die Druckschrift US 2006/002155 A1 beschreibt eine Nutzung einer Hilfswicklung, um eine primärseitige Ausgangsspannung bei einem nicht leistungsfaktor-korrigierten Schaltnetzteil primärseitig zu regeln. Zudem wird das Schaltnetzteil abhängig von einer Größe des Momentanwerts einer Eingangsspannung zwischen verschiedenen Betriebsmodi, einem DCM (Discontinuous Current Mode) - Modus und einem CDCM (Critical Discontinuous Conduction Mode) - Modus, umgeschaltet.

Für kleine Leistungen von unter 100 Watt (W) sind Schaltnetzteile bekannt, die einstufig aufgebaut sind und lediglich einen Abwärts-Sperrwandler aufweisen. Bei einem Sperrwandler ist ein getaktetes Schaltorgan mit der Speicherinduktivität des Wandlers reihenverschaltet angeordnet. Bei Verwendung in einem Netzteil dient der Übertrager selbst als Speicherinduktivität.

Ohne weitere Korrekturmaßnahmen sind die Eingangsströme derartiger einstufiger Schaltnetzteile mit Sperrwandler nicht sinusförmig und phasenverschoben zum sinusförmigen Eingangsspannungsverlauf. Insbesondere weisen sie höherfrequente Anteile auf (Oberschwingungen) die in anderen elektrischen oder elektronischen Geräten Störungen verursachen können. Quantitativ lässt sich dieses durch den sogenannten Leistungsfaktor beschreiben, der das Verhältnis des Betrags der Wirkleistung zur Scheinleistung eines Verbrauchers, also in diesem Fall des Schaltnetzteils, angibt. Der Leistungsfaktor kann Werte zwischen 0 und 1 annehmen, wobei 1 der Idealwert ist, bei dem weder Oberschwingungen vorliegen, noch der Eingangsstrom ein Phasenunterschied zur Eingangsspannung zeigt.

Um insbesondere bei Schaltnetzteilen von Leistungen über 100 Weinen hohen Leistungsfaktor zu erreichen, ist ein zweistufiger Aufbau der Schaltnetzteile üblich, wobei dem eigentlichen Abwärts-Sperrwandler eine Leistungsfaktorkorrekturstufe (PFC - Power Factor Correction) vorgeschaltet ist. Diese PFC-Stufe ist in der Regel ein Aufwärtswandler, der einen Kondensator auf eine Zwischenkreisspannung auflädt, die höher ist als eine Scheitelspannung der NetzWechselspannung.

Aus der Druckschrift DE 10 2016 110427 A1 ist eine einstufige Wandlerschaltung eines Schaltnetzteils bekannt, mit der sich auch in einem Leistungsbereich von mehr als 100 Wein hoher Leistungsfaktor erzielen lässt. Zu diesem Zweck wird ein Wandler eingesetzt, bei dem eine Leistungsfaktorkorrektur in einen Abwärts-Sperrwandler integriert wird. Einstufig bedeutet dabei, dass das Schaltnetzteil nur eine Wandelstufe mit entsprechend nur einem getakteten Schaltorgan aufweist, nämlich den leistungsfaktorkorrigierten Abwärts-Sperrwandler. Dabei wird zur Regelung der Ausgangsspannung ein Rückkoppelzweig mit einem galvanisch trennenden Optokoppler eingesetzt, durch den ein Wert der Ausgangsspannung als Führungsgröße der Spannungsregelung auf die Primärseite des Schaltnetzteils zurückgeführt wird. Die Möglichkeit, auf eine separate PFC-Stufe zu verzichten, macht dieses Netzteil für kostengünstige Anwendungen interessant. Eine weitere Bauteile- und Kosteneinsparung wäre möglich, wenn die Regelung der Ausgangsspannung ohne den genannten Optokoppler zur galvanischen Trennung erfolgen könnte.

Es ist daher eine Aufgabe der vorliegenden Erfindung, ein Schaltnetzteil der eingangs genannten Art und ein Verfahren zur Regelung einer Ausgangsspannung eines derartigen Schaltnetzteils zu schaffen, bei denen auf einen Optokoppler zur Rückführung eines sekundärseitigen Signals auf eine Primärseite verzichtet werden kann und die dennoch ein gutes Regelverhalten für die Ausgangsspannung zeigen.

Diese Aufgabe wird durch ein Schaltnetzteil und ein Verfahren zur Regelung eines solchen mit den Merkmalen des jeweiligen unabhängigen Anspruchs gelöst. Vorteilhafte Ausgestaltungen und Weiterbildungen sind Gegenstand der jeweiligen abhängigen Ansprüche.

Ein erfindungsgemäßes Verfahren zum Regeln einer Ausgangsspannung eines Schaltnetzteils mit einem leistungsfaktorkorrigierten Abwärts-Sperrwandler und einem Übertrager, wobei der Abwärts-Sperrwandler eingangsseitig mit einer pulsierenden Gleichspannung beaufschlagt ist, zeichnet sich dadurch aus, dass der Übertrager neben einer Primärwicklung und einer Sekundärwicklung eine Hilfswicklung aufweist, wobei ein Wert einer in der Hilfswicklung induzierten Spannung als Führungsgröße zur Regelung der Ausgangsspannung eingesetzt wird, und wobei der zur Regelung eingesetzte Wert bei einem vorgegebenem Momentanwert der pulsierenden Gleichspannung bestimmt wird.

Anstelle der gemäß dem Stand der Technik bei einem solchen einstufigen Schaltnetzteil mit integrierter Leistungsfaktorkorrektur bekannten Rückkopplung des Werts der Ausgangsspannung über einen Optokoppler wird eine in der Hilfswicklung induzierte Spannung als Führungsgröße für die Regelung der Ausgangsspannung auf der Primärseite des Schaltnetzteils genutzt. Da die Eingangsspannung des Abwärts-Sperrwandlers jedoch nicht konstant ist, wird erfindungsgemäß die induzierte Spannung nur bei den vorgegebenen Momentanwerten der pulsierenden Eingangsspannung gemessen und der Regelung zugrunde gelegt. Erst dadurch kann die in der Hilfswicklung induzierte Spannung Grundlage eines stabilen Regelkreises sein. Andernfalls zeigt sie eine so große Abhängigkeit von dem sich ändernden Momentanwert der Eingangsspannung, dass sie nicht ausreichend genau den Wert der Ausgangsspannung repräsentiert.

Nach dem erfindungsgemäßen Verfahren wird ein den Momentanwert der pulsierenden Eingangsspannung repräsentierendes Spannungssignal mit einer Triggerspannung verglichen, um Triggerzeitpunkte zu ermitteln, zu denen der Wert einer in der Hilfswicklung induzierten Spannung gemessen wird. Bevorzugt wird zur Regelung ein Pulsweitenmodulations-Signal (PWM-Signal) erzeugt, das ein Schaltorgan ansteuert, das mit der Primärwicklung des Übertragers reihenverschaltet ist. Dabei wird das Schaltnetzteil zumindest in einem auf den Triggerzeitpunkt folgenden PWM-Zyklus in einem DCM (Discontinuous Current Mode) - Modus oder einem TM (Transition Mode) -Modus betrieben wird. In diesen Betriebsarten ist eine Ausschaltzeit des Schaltorgans so lang gewählt, dass ein Strom in der Sekundärwicklung des Übertragers bis auf null abgesunken ist. Erfindungsgemäß wird in dem auf den Triggerzeitpunkt folgenden PWM-Zyklus der Wert der in der Hilfswicklung induzierten Spannung gemessen, wenn ein Strom durch die Sekundärwicklung gleich null ist. Dabei ist unter dem Merkmal "gleich null" zu verstehen, dass der Strom durch die Sekundärwicklung zumindest so klein geworden ist, dass das Ergebnis der Messung der indizierten Spannung die Ausgangsspannung ausreichend unverfälscht repräsentiert. Im Rahmen der Anmeldung fällt beispielsweise ein Stromwert von etwa 5 % eines Maximalstroms durch die Sekundärwicklung noch unter das Merkmal "gleich null".

Der Zeitpunkt, in dem der Strom in der Sekundärwicklung des Übertragers gerade auf null abgesunken ist, ist der am besten geeignete Zeitpunkt für eine Messung des induzierten Signals, da zu diesem Zeitpunkt die induzierte Spannung am wenigsten verfälscht die Ausgangsspannung des Schaltnetzteils repräsentiert. Während eines Stromflusses durch die Sekundärwicklung verfälscht z.B. ein Spannungsabfall durch einen ohmschen Verlust die gemessenen Werte. Es ist besonders vorteilhaft, die Messung in dem PWM-Zyklus zu einem vorgegebenen Zeitpunkt nach einem Abschalten des Schaltorgans durchzuführen.

In einer weiteren vorteilhaften Ausgestaltung des Verfahrens ist ein Sollwert für eine Stromregelung des durch die Primärwicklung des Übertragers fließenden Stroms proportional zu einer Sollwertvorgabe und zu dem Momentanwert der pulsierenden Gleichspannung.

Bevorzugt wird dabei ein Ausgang des Stromreglers einem PWM-Generator zugeführt, der ein PWM-Signal zur Ansteuerung eines Schaltorgans erzeugt, wobei das Schaltorgan mit der Primärwicklung des Übertragers reihenverschaltet ist. Der Sollwert für den Stromregler ist sowohl proportional zu einer Sollwertvorgabe, die an einem Ausgang eines Spannungsreglers des Schaltnetzteils anliegt, als auch proportional zu der Eingangsspannung des Abwärts-Sperrwandlers. Mit anderen Worten wird die Sollwertvorgabe mit der zeitlichen Änderung der Eingangsspannung moduliert, um den eigentlichen Sollwert zu erhalten. Zur Aufmodulation des Eingangsspannungsverlaufs auf die Sollwertvorgabe weist das Schaltnetzteil bevorzugt einen Multiplizierer auf. Der Multiplizierer bestimmt den Sollwert als Produkt der Sollwertvorgabe und einer zur Eingangsspannung proportionalen Spannung.

Der Maximalwert (Peakwert) des Stroms durch die Primärwicklung des Übertragers innerhalb einer Schaltperiode des Schaltnetzteils variiert damit mit dem Zeitverlauf der Eingangsspannung des Abwärts-Sperrwandlers, die wiederum im Wesentlichen den gleichen Zeitverlauf zeigt, wie die gleichgerichtete Eingangsspannung des Schaltnetzteils. Der durch das Schaltnetzteil fließende Strom ist maßgeblich durch den Strom durch die Primärwicklung gegeben. Durch die Berücksichtigung des Eingangsspannungsverlaufs bei der Regelung des Stroms durch die Primärwicklung sind Strom- und Spannungsverlauf des Schaltnetzteils synchron, es wird ein entsprechend hoher Leistungsfaktor nahe 1 erzielt.

Ein erfindungsgemäßes Schaltnetzteil weist einen leistungsfaktorkorrigierten Abwärts-Sperrwandler und einen Übertrager auf, wobei der Abwärts-Sperrwandler eingangsseitig mit einer pulsierenden Gleichspannung beaufschlagt ist und wobei der Übertrager neben einer Primärwicklung und einer Sekundärwicklung eine Hilfswicklung aufweist. Das Schaltnetzteil zeichnet sich dadurch aus, dass es einen Steuerbaustein aufweist, der zur Durchführung eines zuvor beschriebenen Verfahrens eingerichtet ist. Es ergeben sich die im Zusammenhang mit dem Verfahren beschriebenen Vorteil, insbesondere, dass mit geringem Bauteileaufwand ein einstufiges Schaltnetzteil mit integrierter Leistungsfaktorkorrektur und gutem Regelverhalten der Ausgangsspannung realisierbar ist.

In einer vorteilhaften Ausgestaltung des Schaltnetzteils sind ein Spannungsregler, ein Multiplizierer, ein Stromregler und/oder ein PWM-Generator in den Steuerbaustein integriert. Bevorzugt ist der Steuerbaustein ein Mikrocontroller, der somit alle wesentlichen Steuer- bzw. Regelverfahren des Schaltnetzteils umsetzt.

In einer weiteren vorteilhaften Ausgestaltung des Schaltnetzteils dient die Hilfswicklung auch zur Stromversorgung von primärseitigen Bauteilen. Die im Rahmen der Spannungsregelung eingesetzte Hilfswicklung muss somit keine separate Wicklung sein, sondern kann die Wicklung sein, die auch der Bereitstellung einer Hilfsversorgungsspannung dient.

In einer weiteren vorteilhaften Ausgestaltung des Schaltnetzteils ist zur Glättung der Eingangsspannung des Abwärts-Sperrwandlers ein Zwischenkreiskondensator vorhanden, der eine leistungsbezogene Kapazität von etwa 0,5 bis 1 Mikrofarad (µF) pro 100 W maximaler Ausgangsleistung des Schaltnetzteils aufweist. Dadurch, dass eine Leistungsfaktorkorrekturunter Berücksichtigung des Momentanwertes der Eingangsspannung erfolgt, kann vorteilhaft ein Zwischenkreiskondensator mit einer um den Faktor 50 bis 200 gegenüber üblichen Auslegungen von Schaltnetzteilen kleineren Kapazität eingesetzt werden, was Bauraum, Gewicht und Kosten reduziert.

In einer weiteren vorteilhaften Ausgestaltung des Schaltnetzteils ist der Übertrager ein Planarübertrager, wobei die Primärwicklung, die Sekundärwicklung und die Hilfswicklung als Leiterbahnen einer Leiterplatte des Schaltnetzteils ausgebildet sind. Auch dieses trägt zu einer Reduktion von Bauraum, Gewicht und Kosten bei.

Die Erfindung wird nachfolgend anhand von Ausführungsbeispielen mit Hilfe von Figuren näher erläutert. Die Figuren zeigen:
- Figur 1: ein anmeldungsgemäßes einstufiges Schaltnetzteil in einem schematischen Blockschaltbild;
- Figur 2: ein detaillierteres Blockschaltbild des anmeldungsgemäßen Schaltnetzteils gemäß Figur 1 ;
- Figur 3: eine schematische Darstellung von Spannungs- und Stromverläufen bei dem Schaltnetzteil gemäß Figur 2; und
- Figur 4: eine schematische Darstellung eines Spannungsverlaufs bei dem Schaltnetzteil gemäß Figur 2 zur Bestimmung von Triggerzeitpunkten.

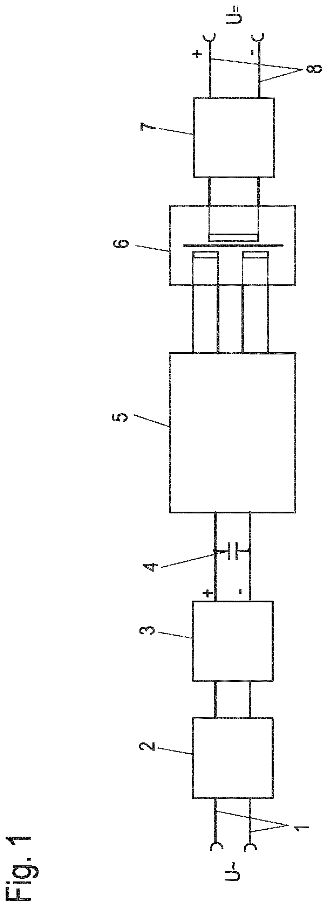

Figur 1 zeigt ein anmeldungsgemäßes Schaltnetzteil in einem schematischen Übersichts-Blockschaltbild.

An Eingangsanschlüssen 1 wird eine Eingangswechselspannung U_{~} angelegt, die über einen EMV-Filter 2 einem Gleichrichter 3 zugeführt wird. Am Ausgang des Gleichrichters 3 bereitgestellte pulsierende Gleichspannung wird unmittelbar einem Zwischenkreiskondensator 4 zugeführt. Dieser Zwischenkreiskondensator 4 ist vorteilhafterweise in seiner Kapazität etwa um den Faktor 50 bis 200 kleiner als typische Zwischenkreiskondensatoren bei mehrstufigen Netzteilen, die eine separate Wandlerstufe zur Leistungsfaktorkorrektur (PFC - Power Factor Correction) aufweisen. Der Grund hierfür ist, dass der Zwischenkreiskondensator 4 bei dem anmeldungsgemäßen Netzteil die pulsierende Gleichspannung nicht über den Zeitverlauf der Netzperiode glätten muss, sondern lediglich kurze Stromimpulse innerhalb einer Schaltperiode des Schaltnetzteils abfängt. Die Schaltperiode ist mit Taktfrequenzen typischerweise über 50 kHz (Kilohertz) jedoch deutlich kürzer als die Netzperiode bei einer Netzfrequenz von 50 oder 60 Hz (Hertz).

Die am Zwischenkreiskondensator 4 anliegende Spannung dient als Eingangsspannung Uᵢₙ für einen Abwärts-Sperrwandler, der intern mit einer integrierten Leistungsfaktorkorrektur ausgestattet ist und daher nachfolgend als leistungsfaktorkorrigierter Abwärts-Sperrwandler bezeichnet wird. Im Blockschaltbild der Figur 1 ist der leistungsfaktorkorrigierter Abwärts-Sperrwandler durch eine Wandlerschaltung 5 und einen Übertrager 6 gebildet.

Am Ausgang des leistungsfaktorkorrigierten Abwärts-Sperrwandlers ist eine Gleichricht- und Siebstufe 7 angeordnet, die an Ausgangsanschlüssen 8 die Ausgangsspannung U= des Schaltnetzteils bereitstellt.

Das anmeldungsgemäße Schaltnetzteil gemäß Figur 1 ist einstufig, da es nur eine Wandelstufe mit entsprechend nur einem getakteten Schaltorgan aufweist und keine separate Wandlerstufe, in der eine PFC umgesetzt ist. Durch die einstufige Bauweise können trotz einer erzielten Ausgangsleistung von mehr als 100 W gegenüber dem zweistufigen Aufbau Bauelemente und daher Bauraum und Kosten eingespart werden. In bevorzugten Ausgestaltungen können Ausgangsleistungen von bis zu 300 W oder auch 500 W erzielt werden.

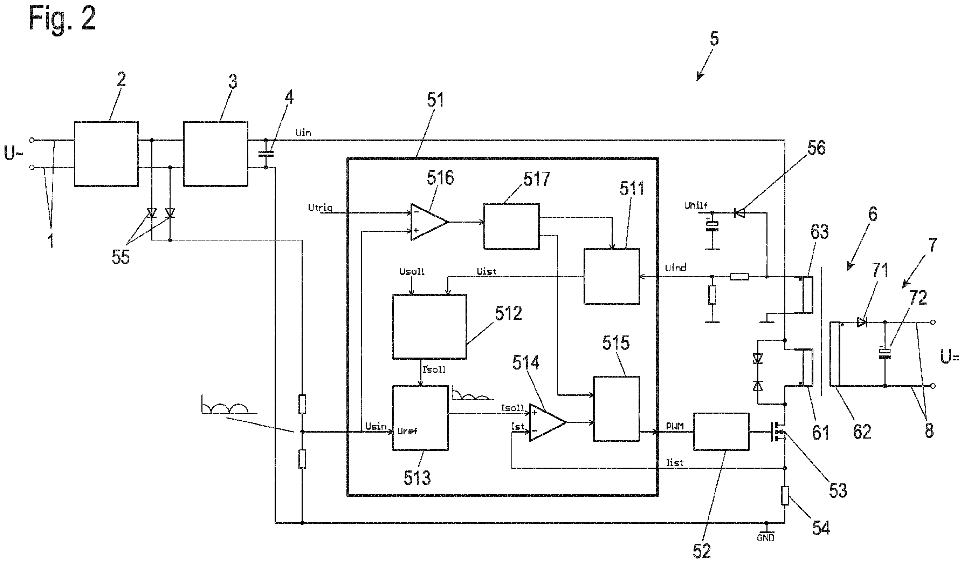

Figur 2 zeigt eine mögliche und vorteilhafte Ausgestaltung des Schaltnetzteils gemäß Figur 1 detaillierter. Gleiche Bezugszeichen kennzeichnen gleiche Elemente wie bei Figur 1.

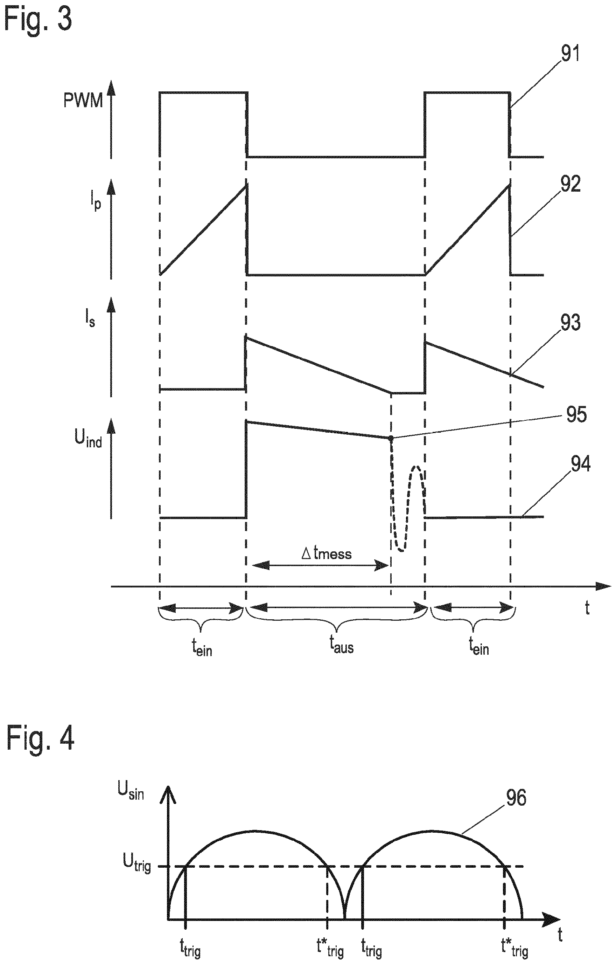

Der leistungsfaktorkorrigierte Abwärts-Sperrwandler umfasst einen Übertrager 6, der vorliegend eine Primärwicklung 61, eine Sekundärwicklung 62 und eine Hilfswicklung 63 aufweist. Die Primärwicklung 61 und die Sekundärwicklung 62 dienen der Energieübertragung von der Eingangsseite (Primärseite) zur Ausgangsseite (Sekundärseite) des Schaltnetzteils. Die Hilfswicklung 63 stellt zum einen eine Hilfsspannung zur Versorgung von primärseitigen elektronischen Komponenten bereit. Zum anderen wird die Hilfswicklung 63 zur Regelung der sekundärseitigen Spannung, d.h. der Ausgangsspannung U=, genutzt. Dieses wird nachfolgend u.a. im Zusammenhang mit Figur 3 näher erläutert.

Der Übertrager 6 kann einen Kern, insbesondere einen Feritkern aufweisen, auf den Drahtwicklungen als Primärwicklung 61, Sekundärwicklung 62 und Hilfswicklung 63 angeordnet sind. In einer platzsparenden Ausgestaltung kann der Übertrager 6 als Planerübertrager ausgebildet sein. Besonders vorteilhaft sind die genannten Wicklungen 61-63 dabei durch Leiterbahnen einer Leiterplatte des Schaltnetzteils gebildet. Hierzu wird bevorzugt eine mehrlagige Leiterplatte eingesetzt.

Die Primärwicklung 61 ist über ein Schaltorgan 53, vorliegend beispielhaft ein MOSFET (Metal Oxide Semiconductor Field-Effect Transistor) und einen Shunt 54, der der Strommessung dient, mit dem Zwischenkreiskondensator 4 verbunden. An der Reihenschaltung aus Primärwicklung 61, Schaltorgan 53 und Shunt 54 liegt somit die Eingangsspannung Uᵢₙ des leistungsfaktorkorrigierten Abwärts-Sperrwandlers an.

Parallel zur Primärspule 61 ist eine Spannungsbegrenzungsschaltung angeordnet, die induktionsbedinge Spannungsspitzen über der Primärwicklung 61 begrenzt, und das Schaltorgan 53 vor einer Zerstörung schützt. Zu diesem Zweck muss die Spannungsbegrenzungsschaltung in der Lage sein, die in einer Streuinduktivität des Übertragers 6 gespeicherte Energie aufzunehmen. Vorliegend wird dieses durch eine Kombination aus einer Diode und einer Zenerdiode in entsprechender Dimensionierung erreicht. Alternativ kann die Spannungsbegrenzungsschaltung auch durch eine Reihenschaltung einer Diode mit einem Halbleiterschalter als aktiv geschaltetem Element realisiert sein. Durch Verwendung des Halbleiterschalters kann auf einfache Weise eine höhere Leistung aufgenommen werden, als es durch die direkte Verwendung von Zeneroder Transzorb-Dioden möglich wäre.

Das Schaltorgan 53 wird durch einen Steuerbaustein 51 angesteuert, der an einem Ausgang ein pulsweitenmoduliertes Signal (PWM-Signal) ausgibt, das verwendet wird, um das Schaltorgan 53 über einen Treiberbaustein 52 getaktet zu schalten. Typische Taktfrequenzen liegen bei über 50 kHz. Die durch den getakteten (gepulsten) Betrieb der Primärwicklung 61 in der Sekundärwicklung 62 des Übertragers 6 induzierte Spannung wird durch eine Gleichrichterdiode 71 gleichgerichtet und mit Hilfe eines Siebkondensators 72 geglättet. Gleichrichterdiode 71 und Siebkondensator 72 bilden in dem gezeigten Beispiel die Gleichricht- und Siebstufe 7 gemäß Figur 1. Die geglättete Spannung am Siebkondensator 72 stellt die an den Ausgangsanschlüssen 8 bereitgestellte Ausgangsspannung U= des Schaltnetzteils dar. Es wird angemerkt, dass anstelle der Einweg-Gleichrichtung über die Gleichrichterdiode 71 in der Gleichrichtund Siebstufe 7 auch ein Brückengleichrichter eingesetzt werden kann. Auch eine besonders verlustfreie Gleichrichtung mit aktiv angesteuerten Halbleiterschaltern kann vorgesehen sein.

Die Hilfswicklung 63 dient einerseits zur Erzeugung einer Hilfsspannung U_{hilf}, mit der der Steuerbaustein 51 und der Treiber 52 mit Betriebsstrom versorgt werden. Dazu wird die in der Hilfswicklung 63 induzierte Spannung über eine Diode 56 gleichgerichtet und mit einem nicht näher bezeichneten Siebkondensator geglättet.

Anmeldungsgemäß wird weiterhin die Ausgangsspannung U= mithilfe der Hilfswicklung 63 auf einen vorgegebenen Wert geregelt. Die gesamte Regelung des Schaltnetzteils wird dabei durch den Steuerbaustein 51 vorgenommen, der bevorzugt durch einen Mikrocontroller realisiert ist. Dem Steuerbaustein 51 wird die in der Hilfswicklung 63 induzierte Spannung an einem A/D (Analog/Digital) - Wandler 511 zugeführt, der einen die Ausgangsspannung U= repräsentierenden Spannungswert Uᵢₛₜ an einen Spannungsregler 512 ausgibt. Die Messung der induzierten Spannung der Hilfswicklung 63 erfolgt dabei zu bestimmten Zeitpunkten, was im Zusammenhang mit Figur 3 noch detailliert erläutert wird. Zur Festlegung der Zeitpunkte dient ein Komparator 516 und eine Zeitablaufsteuerung 517, die ein Triggersignal u.a. an den A/D-Wandler 511 ausgibt.

Der Spannungsregler 512 ist bevorzugt als PI (Proportional/Integral)-Regler ausgebildet. Neben der Information Uᵢₛₜ über den Istwert der Höhe der Ausgangsspannung U= wird dem Spannungsregler 512 ein Sollwert Uₛₒₗₗ zugeführt. An einem Ausgang des Spannungsreglers 512 wird eine Sollwertvorgabe I'ₛₒₗₗ für einen gewünschten Strom durch die Primärwicklung 61 ausgegeben.

Zur Einstellung des Stroms durch die Primärwicklung 61 ist dann ein Stromregler 514 im Steuerbaustein 51 angeordnet, dessen Ausgang einen PWM-Generator 515 beeinflusst, der schließlich das PWM-Steuersignal für den Treiberbaustein 52 und damit das Schaltorgan 53 ausgibt. Im Beispiel der Figur 2 ist der Stromregler 514 durch einen Vergleicher symbolisiert.

Als Besonderheit des Steuerbausteins 51 wird die Sollwertvorgabe I'ₛₒₗₗ, die der Spannungsregler 512 ausgibt, nicht unmittelbar als Sollwert dem Stromregler 514 zugeführt. Stattdessen wird in einem Multiplizierer 513 die Sollwertvorgabe I'ₛₒₗₗ für den Strom mit einem Spannungsverlauf Uₛᵢₙ multipliziert und das Produkt beider als Sollwert Iₛₒₗₗ dem Stromregler 514 vorgegeben. Dieser vergleicht diesen Sollwert mit einem Strom-Istwert Iᵢₛₜ, der am Shunt 54 abgegriffen wird.

Das Signal Uₛᵢₙ ist ein von zwei Dioden 55 hinter dem EMV-Filter 2 abgegriffenes und gleichgerichtetes sowie durch einen Spannungsteiler skaliertes Spannungssignal. Das Signal Uₛᵢₙ gibt im Wesentlichen den Verlauf der Eingangsspannung Uᵢₙ am leistungsfaktorkorrigierten Abwärts-Sperrwandler wieder, allerdings ohne den Einfluss des Zwischenkreiskondensators 4, der die Eingangsspannung Uᵢₙ des Abwärts-Sperrwandlers insbesondere bei geringer Leistungsabgabe des Schaltnetzteils glättet. Das Signal Uₛᵢₙ entspricht einer leicht geglätteten, sinusförmig pulsierenden Gleichspannung, deren zeitlicher Spannungsverlauf in der Figur 2 in Form eines kleinen Diagramms symbolisiert dargestellt ist.

Die Multiplikation der Sollwertvorgabe I'ₛₒₗₗ für den Strom mit diesem Signal bewirkt, dass der Sollwert Iₛₒₗₗ für den Strom durch die Primärwicklung 61 den Zeitverlauf der Eingangsspannung Uᵢₙ widerspiegelt. Auch der Spannungsverlauf des Sollwerts Iₛₒₗₗ ist in der Figur 2 durch ein kleines Diagramm symbolisiert. Entsprechend variiert auch der Strom-Istwert Iᵢₛₜ, also der tatsächlich durch die Primärwicklung 61 fließende Strom, im Wesentlichen proportional mit der Höhe der Eingangsspannung Uᵢₙ des leistungsfaktorkorrigierten Abwärts-Sperrwandlers. Auf diese Weise wird die Leistungsfaktorkorrektur beim Abwärts-Sperrwandler umgesetzt.

Diese Korrektur stellt naturgegeben einen Eingriff in den Spannungsregelkreis des Steuerbausteins 51 dar, mit dem die Ausgangsspannung U= geregelt wird. Durch Berücksichtigung der in der Hilfswicklung 63 induzierten Spannung zu den durch den Triggerpunktdetektor 516 und die Messablaufsteuerung 517 festgelegten Zeitpunkten wird dennoch ein gutes Spannungsregelverhalten für die Ausgangsspannung U= erzielt.

Wie bereits erwähnt, kann der Steuerbaustein 51 vorteilhaft durch einen Mikrocontroller realisiert werden, wobei die beiden Regler, der Spannungsregler 512 und der Stromregler 514, als digitale Regler arbeiten. Der bereits im A/D-Wandler 511 digitalisierte Wert der induzierten Spannung der Hilfswicklung 63 kann unmittelbar verarbeitet werden. Analog vorliegende Werte wie der Verlauf des Spannungssignals Uₛᵢₙ oder der Strom-Istwert Iᵢₛₜ werden vor der Verarbeitung in A/D-Wandlern des Steuerbausteins 51 digitalisiert, auch wenn dieses in der schematischen Blockdarstellung der Figur 2 nicht dargestellt ist. Alternativ ist es auch möglich, eine analoge Weiterverarbeitung analog vorliegender Werte innerhalb des Steuerbausteins 51 vorzunehmen, wenn dieser entsprechende Analogkomponenten wie Vergleicher o.ä. bereitstellt.

Figur 3 zeigt schematisch in Kurven 91-94 Verläufe verschiedener Spannungen bzw. Ströme des Schaltnetzteils. Die Kurven 91-94 sind über einer gemeinsamen Zeitachse fortschreitender Zeit t dargestellt.

Im oberen Teil der Figur ist zunächst in der Kurve 91 das PWM-Signal wiedergegeben, das vom Pulsweitenmodulator 515 ausgegeben wird. Es zeigt das ab wechselnde Ein- bzw. Ausschalten des Schaltorgans 53 für eine Einschaltdauer tₑᵢₙ und eine Ausschaltdauer tₐᵤₛ.

In der Kurve 92 ist ein primärer Strom Iₚ durch die Primärwicklung 61 dargestellt, der sich aus dem Ein- bzw. Ausschalten des Schaltorgans 53 ergibt. Die Kurve 93 wiederum gibt den durch die Sekundärwicklung 62 fließenden Sekundärstrom Iₛ wieder.

Es ist zu erkennen, dass der Primärstrom Iₚ während der Einschaltdauer tₑᵢₙ linear ansteigt und während der Ausschaltdauer tₐᵤₛ null beträgt. Der Sekundärstrom Iₛ steigt dagegen rapide an, wenn das Schaltorgan 53 abgeschaltet wird und sinkt danach linear auf null ab. Das Verhältnis der Zeitdauer, die benötigt wird, bis der Sekundärstrom Iₛ auf null abgesunken ist, zu der Ausschaltdauer tₐᵤₛ bestimmt die Betriebsweise des Schaltnetzteils. Wenn das Schaltorgan 53 wieder eingeschaltet wird, bevor der Sekundärstrom Iₛ auf null abgesunken ist, wird das Schaltnetzteil im sogenannten kontinuierlichen Modus betrieben (CCM - Continuous Current Mode). Verweilt der Sekundärstrom Iₛ jedoch für einige Zeit auf dem Wert null, bevor das Schaltorgan 53 wieder eingeschaltet wird (wie es im dargestellten Fall ist), wird das Schaltnetzteil im sogenannten diskontinuierlichen Modus betrieben (DCM - Discontinuous Current Mode). Wird in etwa dann wieder eingeschaltet, wenn der Sekundärstrom IS auf null abgesunken ist, wird das Schaltnetzteil im sogenannten Übergangsmodus betrieben (TM - Transition Mode).

In der unteren Kurve 94 ist der Zeitverlauf des in der Hilfsspule 63 induzierten und dem A/D-Wandler 511 zugeführte Spannungssignals U_{ind} wiedergegeben. Das Spannungssignal U_{ind} zeigt einen von null verschiedenen Wert während der Ausschaltdauer des Schaltorgans 53. Während der Sekundärstrom Iₛ zu Beginn der Ausschaltdauer tₐᵤₛ auf null abfällt, weist das Spannungssignal U_{ind} eine annähernd konstante Spannung auf, die mit der Ausgangsspannung U= des Schaltnetzteils korreliert ist. Wenn der Sekundärstrom Iₛ den Wert null erreicht hat, zeigt das Spannungssignal U_{ind} in der Regel einen Einschwingvorgang auf den Wert null hin, den es während der Einschaltdauer tₑᵢₙ des Schaltorgans 53 einnimmt. In diesem Bereich, in dem das Spannungssignal U_{ind} nicht mehr mit der Ausgangsspannung U= korreliert ist, ist die Kurve 94 gestrichelt dargestellt.

Wie die Figur 3 zeigt, ist das Spannungssignal U_{ind} auch zu Beginn der Ausschaltdauer tₐᵤₛ nicht konstant, sondern nimmt leicht ab. Diese Abnahme ist im Wesentlichen proportional zum Sekundärstrom Iₛ und ist auf ohmsche Verluste im Übertrager 6 zurückzuführen. Im Umkehrschluss bedeutet dies, dass der Moment, in dem der Sekundärstrom Iₛ den Wert 0 erreicht hat, den geeignetsten Messzeitpunkt darstellt, um aus dem Wert von U_{ind} auf die Ausgangsspannung U= des Schaltnetzteils zu schließen. In der Figur 3 ist dieser optimale Messzeitpunkt mit dem Bezugszeichen 95 gekennzeichnet.

Gemäß einem anmeldungsgemäßen Verfahren wird der Messpunkt 95 nach einer für das Schaltnetzteil charakteristischen Zeit Δtₘₑₛₛ nach dem Abschalten des Schaltorgans 53 erreicht. Praktisch kann die Zeit Δtₘₑₛₛ etwas kürzer gewählt werden, als die Zeit, bei der der Sekundärstrom Iₛ tatsächlich den Wert null erreicht, um sicherzustellen, dass der Messpunkt 95 nicht in den Bereich der Kurve 95 fällt, in dem der gestrichelt dargestellte Schwingvorgang bereits eingesetzt hat. Vorteilhaft an der zeitlichen Festlegung des Messpunkts 95 ist die einfache Umsetzbarkeit dieses Verfahrens, wodurch sich auch weniger leistungsfähige Mikrocontroller als Steuerbaustein 51 einsetzen lassen.

Im Blockschaltbild der Figur 2 wird die Messung der induzierten Spannung U_{ind} durch den A/D-Wandler 511 von der Messablaufsteuerung 517 getriggert. Die Messablaufsteuerung 517 wirkt in diesem Fall auch auf den Pulsweitenmodulator 515 ein, um zumindest für den Zyklus des PWM-Verfahrens, in dem das Spannungssignal U_{ind} gemessen wird, die Ausschaltdauer tₐᵤₛ aus so lang zu wählen, dass sie länger als die Zeit Δtₘₑₛₛ ist. Mit anderen Worten wird also zumindest für den Zyklus des PWM-Verfahrens, in dem das Spannungssignal U_{ind} gemessen wird, das Schaltnetzteil im DCM-Modus betrieben. In Zyklen, in denen nicht gemessen wird, kann das Schaltnetzteil wahlweise im DCM- oder im CCM-Modus betrieben werden. In der Regel wird dieses lastabhängig eingestellt.

Wie zuvor erläutert wurde, stellt die Wandlerschaltung 5 zusammen mit dem Übertrager 6 einen leistungsfaktorkorrigierten Abwärts-Sperrwandler dar, dessen Eingangsspannung Uᵢₙ im Wesentlichen einen gleichgerichteten sinusförmigen, nahezu ungeglätteten Verlauf zeigt.

Die an der Reihenschaltung von Schaltorgan 53 und Primärwicklung 61 anliegende Spannung, also die Eingangsspannung Uᵢₙ des Abwärts-Sperrwandlers, beeinflusst jedoch den Wert der in der Hilfswicklung 63 induzierten Spannung U_{ind} für eine gegebene Ausgangsspannung U=. Oder mit anderen Worten, selbst bei gleicher Ausgangsspannung U= würde eine Messung von U_{ind} zu verschiedenen Zeiten der Netzperiode zu unterschiedlichen Werten führen, wodurch die Spannung U_{ind} nicht mehr als Regelgröße für die Spannungsregelung geeignet wäre.

Anmeldungsgemäß wird dennoch eine Regelung über die in der Hilfswicklung 63 induzierte Spannung U_{ind} möglich, indem nur bei bestimmten Momentanwerten der Eingangsspannung Uᵢₙ des Abwärts-Sperrwandlers gemessen wird.

Dieses wird in der Schaltung gemäß Figur 2 durch den Triggerpunktdetektor 516 erreicht. Dieser ist als Komparator ausgeführt und vergleicht einen Wert der Spannung Uₛᵢₙ, die von den Dioden 55 und dem nachgeschalteten Spannungsteiler bereitgestellt wird, mit einem vorgegebenen Triggerspannungswert Utrig.

Ein Spannungsverlauf der Spannung Uₛᵢₙ ist in Figur 4 in einem Diagramm anhand einer Kurve 96 schematisch für die Dauer einer Netzperiode, also beispielsweise für 20 Millisekunden (ms) bei einem 50 Hz Stromversorgungsnetz, dargestellt.

Es ist beispielhaft eine Triggerspannung U_{trig} gezeigt, die in jeder Halbwelle der Netzspannung einmal über und einmal unterschritten wird. Es ergeben sich Triggerzeitpunkte t_{trig} und t*_{trig}. Die Triggerzeitpunkte t_{trig} und/oder t*_{trig} werden von der Messablaufsteuerung 517 verwendet, um dann in einem nächsten PWM-Zyklus die Spannung U_{ind} zu messen. Auf diese Weise wird sichergestellt, dass die Spannung U_{ind} zu immer gleichen Eingangsspannungswerten der nicht konstanten Eingangsspannung Uir, des Abwärts-Sperrwandlers bestimmt wird und damit zur Regelung der Ausgangsspannung U= herangezogen werden kann. Die Anzahl von 2 oder 4 Messpunkten pro Netzperiode ist dabei ausreichend, um die Ausgangsspannung U= für die meisten Anwendungsfälle des Schaltnetzteils ausreichend schnell einregeln zu können.

Der Wert der Spannung Uₛᵢₙ entspricht nicht genau der Eingangsspannung Uᵢₙ des Abwärts-Sperrwandlers, da diese noch durch den Zwischenkreiskondensator 4 geglättet ist. Bei größerer Last am Ausgang des Schaltnetzteils sind die Spannungen jedoch gleich. Bei geringerer Last am Ausgang des Schaltnetzteils ist es vorteilhafter, anhand der Spannung Uₛᵢₙ zu triggern, da in diesem Fall die Triggerpunkte sicher überstrichen werden, was bei der geglätteten Eingangsspannung der Wandlerschaltung 5 nicht garantiert wäre.

### Bezugszeichenliste

- 1: Eingangsanschlüsse
- 2: EMV-Filter
- 3: Gleichrichter
- 4: Zwischenkreiskondensator

- 5: Wandlerschaltung (Abwärts-Sperrwandler)
- 51: Steuerbaustein
- 511: A/D-Wandler
- 512: Spannungsregler
- 513: Multiplikator
- 514: Stromregler
- 515: Pulsweitenmodulator (PWM-Generator)
- 516: Triggerpunktdetektor
- 517: Messablaufsteuerung
- 52: Treiberbaustein
- 53: Schaltorgan
- 54: Shunt
- 55, 56: Diode

- 6: Übertrager
- 61: Primärwicklung
- 62: Sekundärwicklung
- 63: Hilfswicklung

- 7: Gleichricht- und Siebstufe
- 71: Gleichrichterdiode
- 72: Siebkondensator

- 8: Ausgangsanschlüsse

- 91-94: Kurve
- 95: Messzeitpunkt
- 96: Kurve

## Patentansprüche

1. Verfahren zum Regeln einer Ausgangsspannung (U=) eines Schaltnetzteils mit einem leistungsfaktorkorrigierten Abwärts-Sperrwandler mit einem Übertrager (6), wobei der Abwärts-Sperrwandler eingangsseitig mit einer pulsierenden Gleichspannung (Uᵢₙ) beaufschlagt ist, wobei der Übertrager (6) neben einer Primärwicklung (61) und einer Sekundärwicklung (62) eine Hilfswicklung (63) aufweist, wobei zur Regelung ein PWM-Signal erzeugt wird, das ein Schaltorgan (53) ansteuert, das mit der Primärwicklung (61) des Übertragers (6) reihenverschaltet ist, und wobei ein Wert einer in der Hilfswicklung (63) induzierten Spannung (U_{ind}) als Führungsgröße zur Regelung der Ausgangsspannung (U=) eingesetzt wird, **dadurch gekennzeichnet, dass** der zur Regelung eingesetzte Wert bei einem vorgegebenem Momentanwert der pulsierenden Gleichspannung (Uᵢₙ) bestimmt wird, wobei ein den Momentanwert der pulsierenden Eingangsspannung (Uᵢₙ) repräsentierendes Spannungssignal (Uₛᵢₙ) mit einer Triggerspannung (U_{trig}) verglichen wird, um Triggerzeitpunkte (t_{trig}, t*_{trig}) zu ermitteln, zu denen der Wert einer in der Hilfswicklung (63) induzierten Spannung (U_{ind}) gemessen wird, wobei zumindest in einem auf den Triggerzeitpunkt (t_{trig}, t*_{trig}) folgenden PWM-Zvklus das Schaltnetzteil in einem DCM, Discontinuous Current, -Modus betrieben wird, wenn ein Strom (Is) durch die Sekundärwicklung (62) für einige Zeit auf dem Wert null verweilt, bevor das Schaltorgan (53) wieder eingeschaltet wird, oder in einem TM, Transition, -Modus betrieben wird, wenn dann wieder eingeschaltet wird, wenn der Sekundärstrom (Is) auf null abgesunken ist, und wobei in dem auf den Triggerzeitpunkt (t_{trig}, t*_{trig}) folgenden PWM-Zyklus der Wert der in der Hilfswicklung (63) induzierten Spannung (U_{ind}) gemessen wird, wenn ein Strom durch die Sekundärwicklung (62) gerade auf null abgesunken ist, und bevor ein Schwingvorgang in der induzierten Spannung (Uind) eingesetzt hat.

2. Verfahren nach Anspruch 1, bei dem die Messung zu einem vorgegebenen Zeitpunkt (Δtₘₑₛₛ) nach einem Abschalten des Schaltorgans (53) durchgeführt wird.

3. Verfahren nach Anspruch 1 oder 2, bei dem ein Sollwert (Iₛₒₗₗ) für eine Stromregelung des durch die Primärwicklung (61) des Übertragers (6) fließenden Stroms (Iₚ) proportional zu einer Sollwertvorgabe (I'ₛₒₗₗ) und zu dem Momentanwert der pulsierenden Gleichspannung (Uᵢₙ) ist.

4. Schaltnetzteil mit einem leistungsfaktorkorrigierten Abwärts-Sperrwandler mit einem Übertrager (6), wobei der Abwärts-Sperrwandler eingangsseitig mit einer pulsierenden Gleichspannung (Uᵢₙ) beaufschlagt ist und wobei der Übertrager (6) neben einer Primärwicklung (61) und einer Sekundärwicklung (62) eine Hilfswicklung (63) aufweist, **dadurch gekennzeichnet, dass** das Schaltnetzteil einen Steuerbaustein (51) aufweist, der zur Durchführung eines Verfahrens gemäß einem der Ansprüche 1 bis 3 eingerichtet ist.

5. Schaltnetzteil nach Anspruch 4, bei dem ein Spannungsregler (512), ein Multiplizierer (513), ein Stromregler (514) und/oder ein PWM-Generator (515) in den Steuerbaustein (51) integriert sind.

6. Schaltnetzteil nach Anspruch 4 oder 5, bei dem der Steuerbaustein (51) ein Mikrocontroller ist.

7. Schaltnetzteil nach einem der Ansprüche 4 bis 6, bei dem die Hilfswicklung (63) auch zur Stromversorgung von primärseitigen Bauteilen dient.

8. Schaltnetzteil nach einem der Ansprüche 4 bis 7, bei dem zur Glättung der Eingangsspannung (Uᵢₙ) des Abwärts-Sperrwandlers ein zwischenkreiskondensator (4) vorhanden ist, der eine leistungsbezogene Kapazität von etwa 1 bis 2 µF pro 100 W maximaler Ausgangsleistung des Schaltnetzteils aufweist.

9. Schaltnetzteil nach einem der Ansprüche 4 bis 8, bei dem der Übertrager (6) ein Planarübertrager ist, wobei die Primärwicklung (61), die Sekundärwicklung (62) und die Hilfswicklung (63) als Leiterbahnen einer Leiterplatte des Schaltnetzteils ausgebildet sind.

## Claims

1. Method for regulating an output voltage (U=) of a switched-mode power supply having a power-factor-corrected step-down flyback converter with a transformer (6), wherein a pulsating DC voltage (Uᵢₙ) is applied to the input side of the step-down flyback converter, wherein the transformer (6) has, in addition to a primary winding (61) and a secondary winding (62), an auxiliary winding (63), wherein a PWM signal is generated for the purpose of regulation, which PWM signal actuates a switching element (53) which is series-connected to the primary winding (61) of the transformer (6), and wherein a value of a voltage (U_{ind}) induced in the auxiliary winding (63) is used as a reference variable for regulating the output voltage (U=), **characterized in that**
the value used for regulation is determined at a predetermined instantaneous value of the pulsating DC voltage (Uᵢₙ), wherein a voltage signal (Uₛᵢₙ) representing the instantaneous value of the pulsating input voltage (Uᵢₙ) is compared with a trigger voltage (U_{trig}) in order to determine trigger instants (t_{trig}, t*_{trig}) at which the value of a voltage (U_{ind}) induced in the auxiliary winding (63) is measured, wherein at least in a PWM cycle following the trigger instant (t_{trig}, t*_{trig}) the switched-mode power supply is operated in a DCM, Discontinuous Current Mode, when a current (Is) through the secondary winding (62) dwells at the value zero for some time before the switching element (53) is switched on again or is operated in a TM, Transition Mode, when it is switched on again when the secondary current (Is) has dropped to zero, and wherein in the PWM cycle following the trigger instant (t_{trig}, t*_{trig}) the value of the voltage (U_{ind}) induced in the auxiliary winding (63) is measured when a current through the secondary winding (62) has just dropped to zero and before an oscillation process in the induced voltage (U_{ind}) has started.

2. Method according to claim 1, in which the measurement is carried out at a predetermined time (Δtₘₑₛₛ) after a switch-off of the switching element (53).

3. Method according to claim 1 or 2, in which a setpoint (Iₛₒₗₗ) for a current regulation of the current (Iₚ) flowing through the primary winding (61) of the transformer (6) is proportional to a setpoint specification (I'ₛₒₗₗ) and to the instantaneous value of the pulsating DC voltage (Uᵢₙ).

4. Switched-mode power supply having a power-factor-corrected step-down flyback converter having a transformer (6), wherein a pulsating DC voltage (Uᵢₙ) is applied to the input side of the step-down flyback converter, and wherein the transformer (6) has an auxiliary winding (63) in addition to a primary winding (61) and a secondary winding (62),
**characterized in that** the switched-mode power supply has a control module (51) which is adapted to carry out a method according to one of claims 1 to 3.

5. Switched-mode power supply according to claim 4, in which a voltage regulator (512), a multiplier (513), a current regulator (514) and/or a PWM generator (515) are integrated in the control module (51).

6. Switched-mode power supply according to claim 4 or 5, in which the control module (51) is a microcontroller.

7. Switched-mode power supply according to one of claims 4 to 6, in which the auxiliary winding (63) also serves to supply power to primary-side components.

8. Switched-mode power supply according to one of claims 4 to 7, in which, for smoothing the input voltage (Uᵢₙ) of the step-down flyback converter, an intermediate circuit capacitor (4) is present which has a power-related capacitance of about 1 to 2 µF per 100 W of maximum output power of the switched-mode power supply.

9. Switched-mode power supply according to one of claims 4 to 8, in which the transformer (6) is a planar transformer, wherein the primary winding (61), the secondary winding (62) and the auxiliary winding (63) are formed as conductor tracks of a printed circuit board of the switched-mode power supply.

## Revendications

1. Procédé de régulation d'une tension de sortie (U=) d'une alimentation à découpage avec un convertisseur abaisseur à transfert indirect et correction du facteur de puissance doté d'un transformateur (6), lequel convertisseur abaisseur à transfert indirect est alimenté côté entrée avec une tension continue pulsée (Uᵢₙ), le transformateur (6) présentant, outre un enroulement primaire (61) et un enroulement secondaire (62), un enroulement auxiliaire (63), un signal PWM étant généré pour la régulation, lequel commande un organe de commutation (53) qui est connecté en série avec l'enroulement primaire (61) du transformateur (6), et une valeur d'une tension induite (U_{ind}) dans l'enroulement auxiliaire (63) étant utilisée comme grandeur de référence pour la régulation de la tension de sortie (U=), **caractérisé en ce que** la valeur utilisée pour la régulation est déterminée pour une valeur instantanée prédéfinie de la tension continue pulsée (Uᵢₙ), un signal de tension (Uₛᵢₙ) représentant la valeur instantanée de la tension d'entrée pulsée (Uᵢₙ) étant comparé à une tension de déclenchement (U_{trig}), pour déterminer des instants de déclenchement (t_{trig}, t*_{trig}) auxquels la valeur d'une tension induite (U_{ind}) dans l'enroulement auxiliaire (63) est mesurée, dans lequel, au moins dans un cycle PWM suivant l'instant de déclenchement (t_{trig}, t*_{trig}), l'alimentation à découpage fonctionne dans un mode DCM, Discontinuous Current, lorsqu'un courant (Is) traversant l'enroulement secondaire (62) reste à la valeur zéro pendant un certain temps avant que l'organe de commutation (53) ne soit réactivé, ou dans un mode TM, Transition, lorsqu'il est réactivé quand le courant secondaire (Is) est tombé à zéro, et dans lequel, dans le cycle PWM suivant l'instant de déclenchement (t_{trig}, t*_{trig}), la valeur de la tension induite (U_{ind}) dans l'enroulement auxiliaire (63) est mesurée lorsqu'un courant traversant l'enroulement secondaire (62) vient de tomber à zéro et avant qu'un processus d'oscillation dans la tension induite (U_{ind}) ait commencé.

2. Procédé selon la revendication 1, dans lequel la mesure est effectuée à un instant préfini (Δtₘₑₛₛ) après une désactivation de l'organe de commutation (53).

3. Procédé selon la revendication 1 ou 2, dans lequel une valeur de consigne (Iₛₒₗₗ) pour une régulation de courant du courant (Iₚ) circulant à travers l'enroulement primaire (61) du transformateur (6) est proportionnelle à une définition de valeur de consigne (I'ₛₒₗₗ) et à la valeur instantanée de la tension continue pulsée (Uᵢₙ).

4. Alimentation à découpage avec un convertisseur abaisseur à transfert indirect et correction du facteur de puissance doté d'un transformateur (6), lequel convertisseur abaisseur à transfert indirect est alimenté côté entrée avec une tension continue pulsée (Uᵢₙ) et le transformateur (6) présentant, outre un enroulement primaire (61) et un enroulement secondaire (62), un enroulement auxiliaire (63), **caractérisée en ce que** l'alimentation à découpage présente un composant de commande (51) qui est conçu pour mettre en oeuvre un procédé selon l'une des revendications 1 à 3.

5. Alimentation à découpage selon la revendication 4, dans laquelle un régulateur de tension (512), un multiplicateur (513), un régulateur de courant (514) et/ou un générateur PWM (515) sont intégrés dans le composant de commande (51).

6. Alimentation à découpage selon la revendication 4 ou 5, dans laquelle le composant de commande (51) est un microcontrôleur.

7. Alimentation à découpage selon l'une des revendications 4 à 6, dans laquelle l'enroulement auxiliaire (63) sert également à alimenter en courant des composants côté primaire.

8. Alimentation à découpage selon l'une des revendications 4 à 7, dans laquelle il est prévu, pour lisser la tension d'entrée (Uᵢₙ) du convertisseur abaisseur à transfert indirect, un condensateur de circuit intermédiaire (4) qui présente une capacité en fonction de la puissance d'environ 1 à 2 µF par 100 W de puissance de sortie maximale de l'alimentation à découpage.

9. Alimentation à découpage selon l'une des revendications 4 à 8, dans laquelle le transformateur (6) est un transformateur planaire, l'enroulement primaire (61), l'enroulement secondaire (62) et l'enroulement auxiliaire (63) étant réalisés sous la forme de pistes conductrices d'une carte de circuit imprimé de l'alimentation à découpage.
